# EUROPEAN PATENT APPLICATION

(11) **EP 1 013 728 A1**
(43) Date of publication of application: **28.06.2000**
(21) Application number: 99929838.3
(22) Date of filing: 14.07.1999
(51) Int. Cl.: C09D 11/00

(54) **INK JET RECORDING INK, INK JET RECORDING METHOD AND RECORDINGS**

(30) Priority: 14.07.1998 JP 19914598
(71) Applicant: SEIKO EPSON CORPORATION, Shinjuku-ku, Tokyo 163-0811 (JP)
(72) Inventor: KOMATSU, Hidehiko, Suwa-shi, Nagano 392-8502 (JP); NAKAMURA, Hiroto, Suwa-shi, Nagano 399-8502 (JP)
(74) Representative: Kyle, Diana
(86) International application number: JP9903805
(87) International publication number: WO0004102

(57) **Abstract**

Disclosed is an ink composition for ink jet recording which can yield printed images having no significant uneven feathering or bleeding, can be rapidly dried upon printing, can yield printed image having high print density, and, in addition, has excellent storage stability. This ink composition comprises at least a surface-treated pigment and a penetrating agent, the surface-treated pigment being a pigment which has dispersing groups on its surface and can be solely dispersed in an aqueous solvent, the surface-treated pigment having, under conditions of 20°C and pH 8 to 9, a zeta potential of not less than 30 mV in terms of absolute value as measured on a water dispersion prepared by diluting the pigment by 1,000 times (based on the weight of the pigment) with ion-exchanged water.

## Description

### BACKGROUND OF THE INVENTION

### Field of the Invention

The present invention relates to an ink composition for ink jet recording, an ink jet recording method, and a record.

### Background Art

Ink compositions used in ink jet recording, when printed on recording paper, should generally satisfy property requirements, for example, (1) no significant uneven feathering or bleeding in printed images, (2) high drying rapidity upon printing, and (3) high print density of printed images.

In order to satisfy these requirements, various studies have hitherto been made in the art. For example, reducing feathering or bleeding of printed images and improving the drying speed of printed images by improving the penetration of ink have been studied. Specifically, U.S. Patent No. 5156675 proposes the use of diethylene glycol monobutyl ether, and U.S. Patent No. 5183502 proposes the use of an acetylene glycol surfactant. However, the ink, of which the penetration has been greatly improved with the aid of a penetrating agent, poses a problem that, because a colorant also penetrates deeply into the recording paper, it is difficult to ensure the print density of printed images.

In recent years, studies have become made on the utilization of pigments, possessing waterfastness, lightfastness and other fastness properties superior to those of dyes, as the colorant for inks used in ink jet printers. In general, however, it is difficult to apply the composition using the penetrating agent to pigment-based inks. The reason for this is as follows. Unlike dyes, pigments are insoluble in water. Therefore, stable dispersion of pigment particles in water is important to pigment-based inks. Accordingly, in order to improve the wettability of a pigment in its surface by water and to prevent the sedimentation of the pigment, a method has been used wherein the pigment is dispersed in an aqueous medium with the aid of dispersants, such as various surf actants or aqueous resins. The use of the penetrating agent in pigment-based inks, however, significantly inhibits the dispersion stability of the pigment and makes it impossible to ensure the stability of the ink.

In Japanese Patent Laid-Open No. 15764/1991, an attempt has been made to use a polymer dispersant as a dispersant of a pigment and water, a nonvolatile organic solvent, or a lower alcohol as an aqueous medium in the pigment-based ink using the acetylene glycol penetrating agent to ensure the dispersion stability of the pigment. So far as the present inventors know, however, also in this ink, there is room for improvement in print density.

### SUMMARY OF THE INVENTION

The present inventors have now found that surface-treated pigments having a specific zeta potential can realize penetrating agent-containing, pigment-based ink compositions possessing excellent various properties. In particular, the present inventors have found that the surface-treated pigments having a specific zeta potential can provide ink compositions which can yield printed images having no significant uneven feathering or bleeding, have high drying rapidity upon printing, can realize high print density of printed images, and, in addition, have excellent storage stability. The present invention has been made based on such finding.

Accordingly, it is an object of the present invention to provide an ink composition for ink jet recording which can yield printed images having no significant uneven feathering or bleeding, can be rapidly dried upon printing, can yield printed image having high print density, and, in addition, has excellent storage stability.

It is another object of the present invention to provide a surface-treated pigment which can realize the above ink composition.

According to one aspect of the present invention, there is provided an ink composition for ink jet recording, comprising at least a pigment, a penetrating agent, and water, the pigment being a surface-treated pigment which has dispersing groups on its surface and can be solely dispersed in an aqueous solvent, the pigment having, under conditions of 20°C and pH 8 to 9, a zeta potential of not less than 30 mV in terms of absolute value as measured on a water dispersion prepared by diluting the pigment by 1,000 times (based on the weight of the pigment) with ion-exchanged water.

### DETAILED DESCRIPTION OF THE INVENTION

### Surface-treated pigment

The surface-treated pigment to be used in the present invention is one which has dispersing groups on its surface and can be solely dispersed in an aqueous solvent, the pigment having, under conditions of 20°C and pH 8 to 9, a zeta potential of not less than 30 mV in terms of absolute value as measured on a water dispersion prepared by diluting the pigment by 1,000 times (based on the weight of the pigment) with ion-exchanged water.

According to the present invention, the dispersing group refers to a group which can impart, to a pigment, a property such that the pigment can be dispersed solely, that is, without the addition of any dispersant, in an aqueous solvent. Specific examples of dispersing groups usable herein include carboxyl, hydroxyl, and sulfonic acid groups.

The dispersing groups may be introduced into the surface of the pigment by any suitable method depending upon the type of the dispersing group. For example, when the carboxyl or hydroxyl group is introduced, the use of oxidation treatment is preferred. The term "oxidation treatment" used herein refers to a method wherein the pigment is oxidized with an oxidizing agent (for example, ozone, nitric acid, hydrogen peroxide, hypohalous acid, nitrogen oxide, or fluorine gas) in a liquid or gaseous phase. Further, the introduction of the carboxyl or hydroxyl group by plasma treatment of the pigment on its surface is also possible. The plasma treatment specifically refers to a method which can break the molecular structure of the pigment in its surface by means of an electron gun or within strong magnetic fields to forcibly create a dissociated state, thereby forming dispersing groups on the surface of the pigment. When the introduction of the sulfonic acid group is contemplated, sulfonation treatment is carried out. Specifically, the pigment is treated with a sulfonating agent (for example, sulfuric acid, fuming nitric acid, sulfonated pyridine-carboxylic acid, sulfamic acid, sulfur trioxide, chlorosulfuric acid, or amidosulfuric acid). These treatments may be carried out alone, or alternatively, a plurality of treatments may be simultaneously carried out.

The oxidation treatment and the sulfonation treatment may be carried out according to any known method, for example, may be carried out according to a method described in EP 0834537A1.

The pigment used in the present invention has, under conditions of 20°C and pH 8 to 9, a zeta potential of not less than 30 mV in terms of absolute value as measured on a water dispersion prepared by diluting the pigment by 1,000 times (based on the weight of the pigment) with ion-exchanged water. The zeta potential is preferably not less than 40 mV in terms of absolute value. When the absolute value of the zeta potential falls within the above value range, an ink composition can be realized which has good dispersion stability, causes neither coagulation nor sedimentation, and can realize high print density on paper. The zeta potential may be regulated by regulating the type and amount of the dispersing group. More specifically, the zeta potential may be regulated by regulating the reaction time in the oxidation, sulfonation or the like, the kind of the treatment agent and the like.

According to a preferred embodiment of the present invention, the surface tension of the pigment as measured at 20°C on a water dispersion prepared by diluting the pigment by 1,000 times (based on the weight of the pigment) with ion-exchanged water is preferably not less than 65 mN/m, more preferably not less than 70 mN/m.

According to the present invention, not only carbon black but also an organic pigment may be used as the pigment to be surface-treated. Examples of preferred pigments are as follows. Examples of preferred black pigments include carbon blacks (C. I. Pigment Black 7), such as furnace black, lamp black, acetylene black, and channel black. For organic pigments, examples of black pigments include aniline black (C.I. Pigment Black 1); and examples of color pigments include C.I. Pigment Yellow 1 (fast yellow G), 3, 12 (disazo yellow AAA), 13, 14, 17, 24, 34, 35, 37, 53, 55, 74, 81, 83 (disazo yellow HR), 95, 97, 98, 100, 101, 104, 108, 109, 110, 117, 120, 138, and 153, C.I. Pigment Red 1, 2, 3, 5, 17, 22 (brilliant fast scarlet), 23, 31, 38, 48:2 (permanent red 2B (Ba)), 48:2 (permanent red 2B (Ca)), 48:3 (permanent red 2B(Sr)), 48:4 (permanent red 2B (Mn)), 49:1, 52:2, 53:1, 57:1 (brilliant carmine 6B), 60:1, 63:1, 63:2, 64:1, 81 (rhodamine 6G lake), 83, 88, 101 (iron oxide red), 104, 105, 106, 108 (cadmium red), 112, 114, 122 (quinacridone magenta), 123, 146, 149, 166, 168, 170, 172, 177, 178, 179, 185, 190, 193, 209, and 219, and C.I. Pigment Blue 1, 2, 15 (phthalocyanine blue R), 15:1, 15:2, 15:3 (phthalocyanine blue G), 15:4, 15:6 (phthalocyanine blue E), 16, 17:1, 56, 60, and 63.

Further color pigments usable herein include C. I. Pigment Orange 1, 2, 5, 7, 13, 14, 15, 16, 34, 36, and 38; C.I. Pigment Violet 1, 2, 19, and 32; C.I. Pigment Green 1, 4, and 36; and C.I. Pigment Brown 3, 5, 25, and 26.

The amount of the surface-treated pigment added to the ink composition may be properly determined. The amount of the surface-treated pigment added, however, is preferably 0.5 to 30% by weight, more preferably 1.0 to 12% by weight. When the amount of the surface-treated pigment falls within the above amount range, an ink composition can be realized which can yield printed images having good print density and, at the same time, possesses excellent ejection stability.

The particle diameter of the surface-treated pigment is preferably not more than 25 µm, more preferably not more than 1 µm.

### Penetrating agent and other ingredients

The ink composition according to the present invention contains a penetrating agent. According to a preferred embodiment of the present invention, the penetrating agent is at least one member selected from the group consisting of acetylene glycol surfactants and glycol ethers.

Examples of preferred acetylene glycol surfactants usable in the present invention include those represented by formula (I): 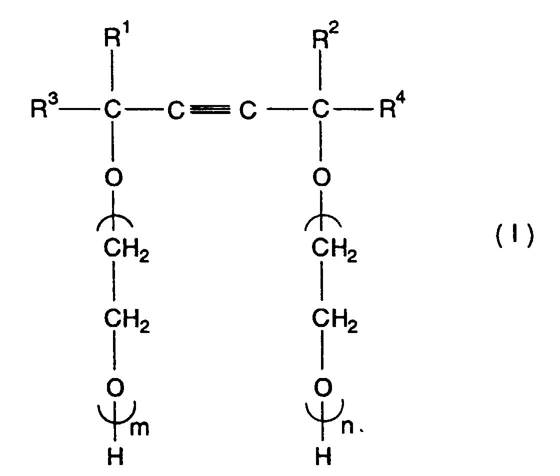 wherein R¹, R², R³, and R⁴ each independently represent an alkyl group (preferably an alkyl group having 1 to 10 carbon atoms); and n + m is 0 to 30.

Commercially available products may be used as the compound represented by the formula (I). Specific examples thereof include Surfynol TG, Surfynol 420, Surfynol 440, and Surfynol T465, (all the above products being manufactured by Air Products and Chemicals Inc.).

Preferred examples of glycol ethers include ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, and triethylene glycol monobutyl ether.

The amount of the penetrating agent added may be properly determined so that the contemplated effect can be attained. The amount of the penetrating agent added, however, is generally about 1 to 30% by weight, preferably about 3 to 15% by weight, based on the ink composition.

In the ink composition according to the present invention, water serves as a main solvent. Water may be pure water obtained by ion exchange, ultrafiltration, reverse osmosis, distillation or the like, or ultrapure water. Further, water, which has been sterilized by ultraviolet irradiation or by addition of hydrogen peroxide or the like, is suitable because, when the ink composition is stored for a long period of time, it can prevent the growth of mold or bacteria.

According to a preferred embodiment of the present invention, hydrophilic high-boiling low-volatile solvents, such as anionic, cationic, or amphoteric various surfactants, high-boiling low-volatile polyhydric alcohols, or monoetherification products, dietherification products, or esterification products thereof, may also be added as an assistant of the penetrating agent from the viewpoints of regulating the penetration of the ink and, in addition, improving nozzle clogging resistance, moisture retention of the ink, and solubility of the penetrating agent.

Examples of hydrophilic high-boiling low-volatile solvents are as follows. Examples of nonionic surfactants usable herein include acetylene glycol alcohol ethylene oxide, fluoro nonionic surfactants, silicone nonionic surfactants, acrylic acid copolymers, polyoxyethylene alkyl ethers, polyoxyethylene alkylphenyl ethers, polyoxyethylene sec-alcohol ethers, polyoxyethylene sterol ethers, polyoxyethylene lauryl ethers, polyoxyethylene lanolin derivatives, oxidized ethylene derivatives of alkyl phenol-formalin condensates, polyoxyethylene-polyoxypropylene block copolymer, polyoxyethylene polyoxypropylene alkyl ethers, fatty acid esters of polyoxyethylene compounds, polyethylene oxide condensation type polyethylene glycol fatty acid esters, fatty acid monoglycerides, polyglycerin fatty acid esters, sorbitan fatty acid esters, propylene glycol fatty acid esters, sucrose fatty acid esters, fatty acid alkanol aides, polyoxyethylene fatty acid amides, polyoxyethylene alkylamines, and alkylamine oxides. Further examples thereof include polyoxyethylene alkyl ethers, polyoxyethylene alkylphenyl ethers, polyoxyethylene sec-alcohol ethers, polyoxyethylene sterol ethers, polyoxyethylene lauryl ethers, polyoxyethylene lanolin derivatives, oxidized ethylene derivatives of alkyl phenol-formalin condensates, polyoxyethylene-polyoxypropylene block copolymer, polyoxyethylene polyoxypropylene alkyl ethers, fatty acid esters of polyoxyethylene compounds, polyethylene oxide condensation type polyethylene glycol fatty acid esters, fatty acid monoglycerides, polyglycerin fatty acid esters, sorbitan fatty acid esters, propylene glycol fatty acid esters, sucrose fatty acid esters, fatty acid alkanol amides, polyoxyethylene fatty acid amides, polyoxyethylene alkylamines, and alkylamine oxides.

Examples of anionic surfactants include higher fatty acid salts, higher alkyldicarboxylic acid salts, higher alcohol sulfuric ester salts, higher alkylsulfonic acid salts, alkylbenzenesulfonic acid salts, alkylnaphthalenesulfonic acid salts, polycondensates of salts (sodium, potassium, lithium, and calcium salts) of naphthalenesulfonic acid with formalin, condensates of higher fatty acids with amino acid, dialkylsulfosuccinic ester salts, alkylsulfosuccinic ester salts, naphthenic acid salts, alkyl ether carboxylic acid salts, acylated peptides, α -olefinsulfonic acid salts, N-acylmethyltaurine, alkyl ether sulfuric aid salts, secondary higher alcohol ethoxysulfates, sodium salts of polyoxyethylene alkyl phenyl ether sulfuric acids, ammonium salts of polyoxyethylene alkylphenyl ether sulfuric acids, monoglyceride sulfate, alkyl ether phosphoric ester salts, and alkylphosphoric ester salts.

Cationic surfactants include aliphatic amine salts, quaternary ammonium salts, sulfonium salts, and phosphonium salts.

Amphoteric surfactants include carboxybetaine type surfactants, aminocarboxylates, and lecithin.

Examples of high-boiling low-volatile polyhydric alcohols include glycerin, ethylene glycol, diethylene glycol, triethylene glycol, propylene glycol, dipropylene glycol, hexylene glycol, polyethylene glycol, and polypropylene glycol. Monoetherification products, dietherification products, and esterification products of the above polyhydric alcohols may also be used. Further examples of high-boiling low-volatile polyhydric alcohols usable herein include N-methyl-2-pyrrolidone, 1,3-dimethylimidazolidinone, monoethanolamine, N,N-dimethylethanolamine, N,N-diethylethanolamine, diethanolamine, N-n-butyldiethanolamine, triisopropanolamine, and triethanolamine.

The amount of the assistant for the penetrating agent may be properly determined so that the addition thereof can offer the contemplated effect. The amount of the assistant added, however, is preferably about 0.01 to 5% by weight, more preferably about 0.1 to 3% by weight, based on the ink composition.

The addition of high-volatile monohydric alcohols, such as ethanol, propanol, isopropanol, and butanol, is also preferred from the viewpoint of improving the drying properties. The amount of the high-volatile monohydric alcohol added is preferably about 0.1 to 20% by weight, more preferably about 1 to 10% by weight, based on the ink composition.

The ink composition according to the present invention may contain a pH adjustor. Specific examples thereof include potassium hydrogenphthalate, potassium dihydrogenphosphate, disodium hydrogenphosphate, sodium tetraborate, potassium hydrogentartrate, sodium hydrogencarbonate, sodium carbonate, tris(hydroxymethyl)aminomethane, and tris(hydroxymethyl)aminomethane hydrochloride. From the viewpoints of the durability of the member constituting the head and the stability of the ink, the amount of the pH adjustor added is preferably such that the ink is brought to an approximately pH range of from 7 to 10.

If necessary, for antimolding, preservative, rust-preventive or other purposes, the ink composition according to the present invention may contain benzoic acid, dichlorophene, hexachlorophene, sorbic acid, p-hydroxybenzoic esters, ethylenediaminetetraactic acid (EDTA), sodium dehydroacetate, 1,2-benzothiazolin-3-one (tradename: Proxel XL, manufactured by ICI), 3,4-isothiazolin-3-one and the like. Further, urea, thiourea, and/or ethyleneurea and the like may be added from the viewpoint of preventing the ink from drying within nozzles.

Various properties of the ink composition according to the present invention may be properly regulated. According to a preferred embodiment of the present invention, the viscosity of the ink composition is preferably not more than 10 mPa·sec at 20°C, more preferably not more than 5 mPa·sec at 20°C. When the viscosity of the ink is in the above viscosity range, the ink is stably ejected through an ink ejection head. The surface tension of the ink is preferably 25 to 50 mN/m at 20°C, more preferably 30 to 40 mN/m at 20°C.

### EXAMPLES

Printing tests and storage stability tests were carried out as follows.

### Printing test

An ink composition was loaded into an ink jet printer MJ-5000C (manufactured by Seiko Epson Corporation), and then printed on a neutral plain paper Xerox-P (manufactured by Fuji Xerox Co, Ltd.), an acidic plain paper EPP (manufactured by Seiko Epson Corporation), and a recycled paper Xerox-R (manufactured by Fuji Xerox Co., Ltd.).

### Storage stability test

An ink composition was placed in sample bottles made of glass. The sample bottles were then stoppered and allowed to stand respectively at 60°C for one week and at -20°C for one week. At the end of these storage periods, the ink composition was inspected for occurrence of sedimention and coagulation and a change in property values (viscosity and surface tension) from those of the ink composition before the standing.

In the following examples and comparative examples, the zeta potential of the pigment dispersion was measured with a laser-doppler type electrophoresis apparatus (ELS-800, manufactured by Otsuka Denshi K.K), and the surface tension was measured with a tensiometer (CBVP-A3, manufactured by Kyowa Interface Science Co., Ltd.).

### Example 1

### (a) Preparation of pigment dispersion

Carbon Black (MA-7, manufactured by Mitsubishi Chemical Corporation) (12 parts by weight) was mixed with 600 parts by weight of a 5% sodium hypochlorite solution. The mixture was heated under reflux at 80 to 95°C for 10 hr. The system was then washed with water and centrifuged. The washing with water and the centrifugation were repeated, and the system was then adjusted to pH 1 by the addition of hydrochloric acid, followed by desaltation through a reverse osmosis membrane. Triethanolamine was added thereto to adjust the pH value to 8. Thus, a dispersion of 20% by weight of oxidized carbon black was prepared.

Ion-exchanged water was added, in an amount of 1,000 parts by weight based on 1 part by weight of carbon black, to the carbon black dispersion to prepare a 1,000-fold diluted carbon black dispersion. The diluted carbon black dispersion thus obtained had a zeta potential of 60 mV in terms of absolute value as measured under conditions of pH 8 and 20°C. Further, the diluted carbon black dispersion had a surface tension of 71 mN/m.

### (b) Preparation of ink

| | |
|---|---|
| Pigment dispersion prepared above | 30 pts.wt. |
| Surfynol 465 | 1 pt.wt. |
| Ethylene glycol monobutyl ether | 8 pts.wt. |
| Glycerin | 10 pts.wt. |
| Ion-exchanged water | 51 pts.wt. |

The above ingredients were mixed together, and the mixture was filtered to prepare an ink composition.

The ink composition thus obtained was tested for printing performance. As a result, all the printed images were substantially free from uneven feathering, and had very high print density. Further, in printing of blotted images, the drying time defined as the time required for the ink to disappear as a result of penetration into the paper was less than 2 sec for all the recording papers tested. The ink was also tested for storage stability. As a result, under both the storage conditions, sedimention and coagulation hardly occurred, and the property values after standing remained substantially unchanged from those before standing.

### Example 2

### (a) Preparation of pigment dispersion

Carbon Black (MA-100, manufactured by Mitsubishi Chemical Corporation) (8 parts by weight) was dispersed in an aqueous solvent, and 6 parts by weight of sulfamic acid was added to the dispersion. The mixture was then stirred with heating at 120 to 135°C for 8 hr. Washing with water and filtration were repeated, and the system was then adjusted to pH 8.5 by the addition of dimethylaminoethanol. Thus, a dispersion of 16% by weight of sulfonated carbon black was prepared.

Ion-exchanged water was added, in an amount of 1,000 parts by weight based on 1 part by weight of carbon black, to the carbon black dispersion to prepare a 1,000-fold diluted carbon black dispersion. The diluted carbon black dispersion thus obtained had, under conditions of pH 8 to 9 and 20°C, a zeta potential of 45 mV in terms of absolute value and a surface tension of 65 mN/m.

### (b) Preparation of ink

| | |
|---|---|
| Pigment dispersion prepared above | 39 pts.wt. |
| Surfynol 440 | 0.1 pt.wt. |
| Ethylene glycol monobutyl ether | 5 pts.wt. |
| Glycerin | 10 pts.wt. |
| Ion-exchanged water | 45.9 pts.wt. |

The above ingredients were mixed together, and the mixture was filtered to prepare an ink composition.

The ink composition thus obtained was tested for printing performance. As a result, all the printed images were substantially free from uneven feathering, and had very high print density. Further, in printing of blotted images, the drying time defined as the time required for the ink to disappear as a result of penetration into the paper was less than 2 sec for all the recording papers tested. The ink was also tested for storage stability. As a result, under both the storage conditions, sedimention and coagulation hardly occurred, and the property values after standing remained substantially unchanged from those before standing.

### Example 3

### (a) Preparation of pigment dispersion

A phthalocyanine pigment C.I. Pigment Blue 15 : 3 (3 parts by weight) was added to 100 parts by weight of fuming sulfuric acid (SO₃ concentration: 25%) of 5 to 10°C with stirring over a period of 15 min. The mixture thus obtained was stirred at 70 to 90°C for 8 hr, and then poured into ice water. The resultant suspension was filtered and washed, followed by the addition of triethanolamine to adjust pH to 8.2. Thus, a dispersion of 18% by weight of a sulfonated phthalocyanine pigment was prepared.

Ion-exchanged water was added, in an amount of 1,000 parts by weight based on 1 part by weight of the pigment, to the pigment dispersion to prepare a 1,000-fold diluted pigment dispersion. The diluted pigment dispersion thus obtained had, under conditions of pH 8 to 9 and 20°C, a zeta potential of 35 mV in terms of absolute value and a surface tension of 69 mN/m.

### (b) Preparation of ink

| | |
|---|---|
| Pigment dispersion prepared above | 35 pts.wt. |
| Diethylene glycol monobutyl ether | 10 pts.wt. |
| Triethylene glycol monoethyl ether | 5 pts.wt. |
| Glycerin | 10 pts.wt. |
| Ion-exchanged water | 40 pts.wt. |

The above ingredients were mixed together, and the mixture was filtered to prepare an ink composition.

The ink composition thus obtained was tested for printing performance. As a result, all the printed images were substantially free from uneven feathering, and had very high print density. Further, in printing of blotted images, the drying time defined as the time required for the ink to disappear as a result of penetration into the paper was less than 4 sec for all the recording papers tested. The ink was also tested for storage stability. As a result, under both the storage conditions, sedimention and coagulation hardly occurred, and the property values after standing remained substantially unchanged from those before standing.

### Example 4

### (a) Preparation of pigment dispersion

A dispersion of 15% by weight of a sulfonated isoindolinone pigment was prepared in the same manner as in Example 3, except that an isoindolinone pigment (C.I. Pigment Yellow 110) was used as the pigment.

Ion-exchanged water was added, in an amount of 1,000 parts by weight based on 1 part by weight of the pigment, to the pigment dispersion to prepare a 1,000-fold diluted pigment dispersion. The diluted pigment dispersion thus obtained had, under conditions of pH 8 to 9 and 20°C, a zeta potential of 30 mV in terms of absolute value and a surface tension of 70 mN/m.

### (b) Preparation of ink

| | |
|---|---|
| Pigment dispersion prepared above | 40 pts.wt. |
| Surfynol TG | 0.2 pt.wt. |
| Triethylene glycol monobutyl ether | 12 pts.wt. |
| Glycerin | 10 pts.wt. |
| Ion-exchanged water | 37.8 pts.wt. |

The above ingredients were mixed together. The mixture was thoroughly stared, and then filtered to prepare an ink composition.

The ink composition thus obtained was tested for printing performance. As a result, all the printed images were substantially free from uneven feathering, and had very high print density. Further, in printing of blotted images, the drying time defined as the time required for the ink to disappear as a result of penetration into the paper was less than 2 sec for all the recording papers tested. The ink was also tested for storage stability. As a result, under both the storage conditions, sedimention and coagulation hardly occurred, and the property values after standing remained substantially unchanged from those before standing.

### Example 5

### (a) Preparation of pigment dispersion

A dispersion of 16% by weight of a sulfonated quinacridone magenta pigment was prepared in the same manner as in Example 3, except that a quinacridone magenta pigment (C.I. Pigment Red 122) was used as the pigment.

Ion-exchanged water was added, in an amount of 1,000 parts by weight based on 1 part by weight of the pigment, to the pigment dispersion to prepare a 1,000-fold diluted pigment dispersion. The diluted pigment dispersion thus obtained had, under conditions of pH 8 to 9 and 20°C, a zeta potential of 38 mV in terms of absolute value and a surface tension of 69 mN/m.

### (b) Preparation of ink

| | |
|---|---|
| Pigment dispersion prepared above | 38 pts.wt. |
| Surfynol 465 | 1 pt.wt. |
| Glycerin | 10 pts.wt. |
| Ion-exchanged water | 51 pts.wt. |

The above ingredients were mixed together. The mixture was thoroughly stirred, and then filtered to prepare an ink composition.

The ink composition thus obtained was tested for printing performance. As a result, all the printed images were substantially free from uneven feathering, and had very high print density. Further, in printing of blotted images, the drying time defined as the time required for the ink to disappear as a result of penetration into the paper was less than 2 sec for all the recording papers tested. The ink was also tested for storage stability. As a result, under both the storage conditions, sedimention and coagulation hardly occurred, and the property values after standing remained substantially unchanged from those before standing.

### Example 6

### (a) Preparation of pigment dispersion

A dispersion of 15% by weight of a sulfonated aniline black pigment was prepared in the same manner as in Example 3, except that an aniline black pigment (C.I. Pigment Black 1) was used as the pigment.

Ion-exchanged water was added, Than amount of 1,000 parts by weight based on 1 part by weight of the pigment, to the pigment dispersion to prepare a 1,000-fold diluted pigment dispersion. The diluted pigment dispersion thus obtained had, under conditions of pH 8 to 9 and 20°C, a zeta potential of 33 mV in terms of absolute value and a surface tension of 68 mN/m.

### (b) Preparation of ink

| | |
|---|---|
| Pigment dispersion prepared above | 40 pts.wt. |
| Surfynol TG | 0.2 pt.wt. |
| Surfynol 465 | 0.8 pt.wt. |
| Glycerin | 10 pts.wt. |
| Ion-exchanged water | 49 pts.wt. |

The above ingredients were mixed together. The mixture was thoroughly stirred, and then filtered to prepare an ink composition.

The ink composition thus obtained was tested for printing performance. As a result, all the printed images were substantially free from uneven feathering, and had very high print density. Further, in printing of blotted images, the drying time defined as the time required for the ink to disappear as a result of penetration into the paper was less than 2 sec for all the recording papers tested. The ink was also tested for storage stability. As a result, under both the storage conditions, sedimention and coagulation hardly occurred, and the property values after standing remained substantially unchanged from those before standing.

### Example 7

### (a) Preparation of pigment dispersion

A dispersion of 15% by weight of a sulfonated phthalocyanine pigment was prepared in the same manner as in Example 3, except that an phthalocyanine pigment (C.I. Pigment Green 4) was used as the pigment.

Ion-exchanged water was added, in an amount of 1,000 parts by weight based on 1 part by weight of the pigment, to the pigment dispersion to prepare a 1,000-fold diluted pigment dispersion. The diluted pigment dispersion thus obtained had, under conditions of pH 8 to 9 and 20°C, a zeta potential of 40 mV in terms of absolute value and a surface tension of 69 mN/m.

### (b) Preparation of ink

| | |
|---|---|
| Pigment dispersion prepared above | 40 pts.wt. |
| Surfynol 420 | 0.2 pt.wt. |
| Ethylene glycol monobutyl ether | 5 pts.wt. |
| Triethylene glycol monobutyl ether | 7 pts.wt. |
| Glycerin | 10 pts.wt. |
| Ion-exchanged water | 37.8 pts.wt. |

The above ingredients were mixed together. The mixture was thoroughly stirred, and then filtered to prepare an ink composition.

The ink composition thus obtained was tested for printing performance. As a result, all the printed images were substantially free from uneven feathering, and had very high print density. Further, in printing of blotted images, the drying time defined as the time required for the ink to disappear as a result of penetration into the paper was less than 2 sec for all the recording papers tested. The ink was also tested for storage stability. As a result, under both the storage conditions, sedimention and coagulation hardly occurred, and the property values after standing remained substantially unchanged from those before standing.

### Comparative Example 1

A pigment dispersion was prepared in the same manner as in Example 1, except that, in the preparation of the pigment dispersion, the time of heating under reflux was changed from 10 hr to 2 hr. The pigment dispersion after 1,000-fold dilution had, under conditions of pH 8 to 9 and 20°C, a zeta potential of 22 mV in terms of absolute value and a surface tension of 71 mN/m.

An ink composition was prepared in the same manner as in Example 1, except that the pigment dispersion prepared just above was used. The ink composition thus obtained was tested for printing performance. As a result, all the printed images suffered from uneven feathering, and had a print density which was about 10% lower than the print density provided in Example 1. On the other hand, in printing of blotted images, the drying time defined as the time required for the ink to disappear as a result of penetration into the paper was less than 2 sec for all the recording papers tested. The ink was also tested for storage stability. As a result, under both the storage conditions, sedimention or coagulation occurred, and the ink after standing had increased viscosity as compared with the ink before standing.

### Comparative Example 2

A pigment dispersion was prepared in the same manner as in Example 2, except that, in the preparation of the pigment dispersion, the time of heating under reflux was changed from 8 hr to 2 hr. The pigment dispersion after 1,000-fold dilution had, under conditions of pH 8 to 9 and 20°C, a zeta potential of 25 mV in terms of absolute value and a surface tension of 65 mN/m.

An ink composition was prepared in the same manner as in Example 2, except that the pigment dispersion prepared just above was used. The ink composition thus obtained was tested for printing performance. As a result, all the printed images suffered from uneven feathering, and had a print density which was about 10% lower than the print density provided in Example 2. On the other hand, in printing of blotted images, the drying time defined as the time required for the ink to disappear as a result of penetration into the paper was less than 2 sec for all the recording papers tested. The ink was also tested for storage stability. As a result, under both the storage conditions, sedimention or coagulation occurred, and the ink after standing had increased viscosity as compared with the ink before standing.

### Comparative Example 3

A pigment dispersion was prepared in the same manner as in Example 3, except that, in the preparation of the pigment dispersion, the time of heating under reflux was changed from 8 hr to 1 hr. The pigment dispersion after 1,000-fold dilution had, under conditions of pH 8 to 9 and 20°C, a zeta potential of 15 mV in terms of absolute value and a surface tension of 68 mN/m.

An ink composition was prepared in the same manner as in Example 3, except that the pigment dispersion prepared just above was used. The ink composition thus obtained was tested for printing performance. As a result, all the printed images suffered from uneven feathering, and had a print density which was about 15% lower than the print density provided in Example 3. On the other hand, in printing of blotted images, the drying time defined as the time required for the ink to disappear as a result of penetration into the paper was less than 4 sec for all the recording papers tested. The ink was also tested for storage stability. As a result, under both the storage conditions, sedimention or coagulation occurred, and the ink after standing had increased viscosity as compared with the ink before standing.

### Comparative Example 4

A pigment dispersion was prepared in the same manner as in Example 4, except that, in the preparation of the pigment dispersion, the time of heating under reflux was changed from 8 hr to 30 min. The pigment dispersion after 1,000-fold dilution had, under conditions of pH 8 to 9 and 20°C, a zeta potential of 23 mV in terms of absolute value and a surface tension of 68 mN/m.

An ink composition was prepared in the same manner as in Example 4, except that the pigment dispersion prepared just above was used. The ink composition thus obtained was tested for printing performance. As a result, all the printed images suffered from uneven feathering, and had a print density which was about 10% lower than the print density provided in Example 4. On the other hand, in printing of blotted images, the drying time defined as the time required for the ink to disappear as a result of penetration into the paper was less than 2 sec for all the recording papers tested. The ink was also tested for storage stability. As a result, under both the storage conditions, sedimention or coagulation occurred, and the ink after standing had increased viscosity as compared with the ink before standing.

### Comparative Example 5

A pigment dispersion was prepared in the same manner as in Example 5, except that, in the preparation of the pigment dispersion, the time of heating under reflux was changed from 8 hr to 1 hr. The pigment dispersion after 1,000-fold dilution had, under conditions of pH 8 to 9 and 20°C, a zeta potential of 28 mV in terms of absolute value and a surface tension of 70 mN/m.

An ink composition was prepared in the same manner as in Example 5, except that the pigment dispersion prepared just above was used. The ink composition thus obtained was tested for printing performance. As a result, all the printed images suffered from uneven feathering, and had a print density which was about 5% lower than the print density provided in Example 5. On the other hand, in printing of blotted images, the drying time defined as the time required for the ink to disappear as a result of penetration into the paper was less than 4 sec for all the recording papers tested. The ink was also tested for storage stability. As a result, under both the storage conditions, sedimention or coagulation occurred, and the ink after standing had increased viscosity as compared with the ink before standing.

### Comparative Example 6

A pigment dispersion was prepared in the same manner as in Example 6, except that, in the preparation of the pigment dispersion, the time of heating under reflux was changed from 8 hr to 30 min. The pigment dispersion after 1,000-fold dilution had, under conditions of pH 8 to 9 and 20°C, a zeta potential of 16 mV in terms of absolute value and a surface tension of 67 mN/m.

An ink composition was prepared in the same manner as in Example 6, except that the pigment dispersion prepared just above was used. The ink composition thus obtained was tested for printing performance. As a result, all the printed images suffered from uneven feathering, and had a print density which was about 10% lower than the print density provided in Example 6. On the other hand, in printing of blotted images, the drying time defined as the time required for the ink to disappear as a result of penetration into the paper was less than 4 sec for all the recording papers tested. The ink was also tested for storage stability. As a result, under both the storage conditions, sediment ion or coagulation occurred, and the ink after standing had increased viscosity as compared with the ink before standing.

### Comparative Example 7

A pigment dispersion was prepared in the same manner as in Example 7, except that, in the preparation of the pigment dispersion, the time of heating under reflux was changed from 8 hr to 1 hr. The pigment dispersion after 1,000-fold dilution had, under conditions of pH 8 to 9 and 20°C, a zeta potential of 15 mV in terms of absolute value and a surface tension of 68 mN/m.

An ink composition was prepared in the same manner as in Example 7, except that the pigment dispersion prepared just above was used. The ink composition thus obtained was tested for printing performance. As a result, all the printed images suffered from uneven feathering, and had a print density which was 5% lower than the print density provided in Example 7. On the other hand, in printing of blotted images, the drying time defined as the time required for the ink to disappear as a result of penetration into the paper was less than 4 sec for all the recording papers tested. The ink was also tested for storage stability. As a result, under both the storage conditions, sedimention or coagulation occurred, and the ink after standing had increased viscosity as compared with the ink before standing.

## Claims

1. An ink composition for ink jet recording, comprising a pigment, a penetrating agent, and water,
the pigment being a surface treated pigment which has dispersing groups on its surface and can be solely dispersed in an aqueous solvent, the pigment having, under conditions of 20°C and pH 8 to 9, a zeta potential of not less than 30 mV in terms of absolute value as measured on a water dispersion prepared by diluting the pigment by 1,000 times (based on the weight of the pigment) with ion-exchanged water.

2. The ink composition according to claim 1, wherein the water dispersion of the pigment has a surface tension of not less than 65 mN/m at 20°C.

3. The ink composition according to claim 1 or 2, wherein the dispersing groups have been introduced by oxidation of the pigment.

4. The ink composition according to claim 1 or 2, wherein the dispersing groups have been introduced by sulfonation of the pigment.

5. The ink composition according to any one of claims 1 to 4, wherein the pigment is carbon black.

6. The ink composition according to any one of claims 1 to 4, wherein the pigment is an organic pigment.

7. The ink composition according to any one of claims 1 to 6, wherein the penetrating agent is at least one member selected from the group consisting of acetylene glycol surfactants and glycol ethers.

8. The ink composition according to claim 7, wherein the acetylene glycol surfactant is a compound represented by formula (I): 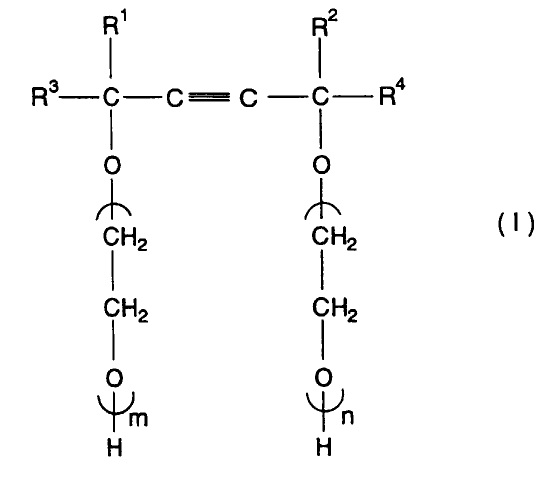 wherein R¹, R², R³, and R⁴ each independently represent an alkyl group; and n + m is 0 to 30.

9. An ink jet recording method comprising the steps of: ejecting droplets of an ink composition; and depositing the droplets onto a recording medium to perform printing, the ink composition being one according to any one of claims 1 to 8.

10. A record produced by the recording method according to claim 9.
